Europäisches Patentamt

(19) European Patent Office

Office européen des brevets

(11) EP 0 698 511 B1

(12) **EUROPEAN PATENT SPECIFICATION**

(45) Date of publication and mention
of the grant of the patent:
**04.08.1999 Bulletin 1999/31**

(51) Int. Cl.⁶: **B60C 11/00**

(21) Application number: **95114789.1**

(22) Date of filing: **01.10.1993**

(54) **Pneumatic tires**

Luftreifen

Bandages pneumatiques

(84) Designated Contracting States:
**DE ES FR GB IT**

(30) Priority: **02.10.1992 JP 26481692**

(43) Date of publication of application:
**28.02.1996 Bulletin 1996/09**

(62) Document number(s) of the earlier application(s) in
accordance with Art. 76 EPC:
**93307823.0 / 0 591 002**

(73) Proprietor:
**Bridgestone Corporation
Tokyo (JP)**

(72) Inventors:
• **Tani, Katsutoshi
Kodaira City, Tokyo (JP)**

• **Yonezawa, Takeshi
Tokorozawa City, Saitama Pref. (JP)**
• **Ando, Toshiaki
Kodaira City, Tokyo (JP)**

(74) Representative: **Whalley, Kevin
MARKS & CLERK,
57-60 Lincoln's Inn Fields
London WC2A 3LS (GB)**

(56) References cited:
**EP-A- 0 118 059**       **EP-A- 0 367 557**
**EP-A- 0 422 571**       **EP-A- 0 495 619**

• **PATENT ABSTRACTS OF JAPAN vol. 14 no. 147
(M-952) [4090] ,20 March 1990 & JP-A-02 011404
(YOKOHAMA)**

## Description

This invention relates to pneumatic tires, and more particularly to a pneumatic radial tire having an improved uniformity and usable for passenger cars as well as small-size trucks, trucks and buses running on good roads.

In pneumatic radial tires for passenger cars, a tread pattern is generally formed by properly combining various kinds of pitch segments having different pitch lengths along the circumference of the tire for reducing various noises based on the tire tread pattern.

In this connection, there have widely been attempted various methods such as a method wherein a ratio of opening width in lateral grooves included in each pitch segment and having an extending component in the widthwise direction of the tread is selected so as to become equal to the pitch ratio when the angle of a groove wall with respect to a surface of a land portion and the groove depth are constant, and a method wherein the angle of a lateral groove wall is selected in such a manner that the volume ratio of the lateral groove having a constant groove depth is equal to the pitch ratio.

In the former technique wherein the ratio of opening width in each lateral groove is made equal to the pitch ratio, the thickness of the tread becomes thicker as the pitch length becomes long, so that the difference in compression modulus of elasticity between the pitch segments becomes considerably larger due to the difference of tread thickness in the pitch segments in addition to the difference in the rigidity between the pitch segment having a long pitch length and the pitch segment having a short pitch length and hence the tire uniformity, particularly higher component in radial force variation (hereinafter referred to as RFV), is degraded to largely cause undesired uneven wear of the tire. In the latter technique wherein the volume ratio in the lateral grooves is made equal to the pitch ratio, the tread thickness and hence the distance from the carcass to the land surface becomes equal independently of the pitch length, but the difference in the pattern rigidity between the pitch segment having a long pitch length and the pitch segment having a short pitch length still remains, so that RFV can not effectively be controlled and the occurrence of uneven wear can not sufficiently be prevented.

In connection with such prior art, attention is in particular drawn to the disclosure of EP-A-0495619.

It is, therefore, an aim of the present invention to overcome the aforementioned drawbacks of the above conventional techniques and to provide a pneumatic tire having considerably improved tire uniformity for RFV.

According to the invention, there is provided a pneumatic tire having a tread pattern formed by arranging lateral grooves having a widthwise extending component in a ground contact portion of a tread and combining at least two kinds of pitch segments having different pitch lengths in the circumferential direction of the tread, in which a negative ratio (circumferential length of the groove to circumferential length of the pitch segment) in each pitch segment is 25-55%.

In the pneumatic tire according to the invention, the negative ratio in each pitch segment is constant and also the depth of the lateral groove included in each pitch segment is constant and the angle of each groove wall with respect to the land surface is made larger in the pitch segment having a longer pitch length. Preferably, the angle is larger in the block having a longer pitch length and smaller in the block having a shorter pitch length as compared with the angle bringing about the volume ratio equal to the pitch ratio as a standard.

The ratio of making the groove wall angle large or small with respect to the groove wall in the middle pitch segment as a standard is preferably 1.5-2.5 times the difference in the groove wall angle between the middle pitch segment and the other pitch segment having the volume ratio equal to the pitch ratio.

That is, when the ratio of the groove wall angle is less than 1.5 times, the difference in tread thickness corresponding to the difference in rigidity between pitch segments may not be obtained, and there is still retained RFV waveform in which the rigidity is large in the long pitch segment and small in the short pitch segment, while when said ratio exceeds 2.5 times, a difference in tread thickness exceeding the difference in rigidity between pitch segments is caused to adopt a waveform in which RFV is small in the long pitch segment and large in the short pitch segment and considerably increase the difference in tread thickness, whereby the danger of forming a nucleus for uneven wear becomes high.

The invention will be further described, by way of example only, with reference to the accompanying drawings, wherein:

Fig. 1 is a schematic view of an embodiment of the tread structure of a pneumatic tire according to the invention;
Fig. 2 is a diagrammatical view of tread patterns applicable to the invention;
Fig. 3 is a diagrammatical view of tread patterns not applicable to the invention; and
Fig. 4 is a diagrammatical view of another tread pattern applicable to the invention.

The tread rubber located as the outermost layer of the tire is generally formed by using a rubber sheet cut into a proper length after being continuously extruded through a extruder, so that the thickness of the green tread rubber used per each tire becomes substantially uniform over the full circumference of the tire.

In the tread rubber, lateral grooves are formed in such a manner that the ratio of groove width is equal to the pitch ratio or the ratio of groove volume is equal to the pitch ratio even in any groove portions in the depthwise direction of the lateral groove, whereby it is made possible to maintain the tread thickness in the tire product constant irrespective of the short or long pitch length.

Even in this case, however, the difference in rigidity between pitch segments due to the short or long pitch length still remains as mentioned above, so that it is impossible to effectively control RFV.

In the invention, the reason why the negative ratio in each pitch segment is limited to a range of 25-55% is due to the fact that when it is less than 25%, the groove width is generally narrow and the angle of the groove wall with respect to the land surface is small, while the tread volume is large, so that the ratio of the difference in groove volume contributing to variation of tread gauge becomes very small. On the other hand, when it exceeds 55%, the running performance on good roads or paved roads can not be attained.

When the negative ratio in each pitch segment is constant and the pitch ratio is equal to the ratio of groove opening width and further the depth of each lateral groove is constant and the angle of groove wall with respect to the land surface is larger in the pitch segment having a longer pitch length, the tread rubber thickness is thinner in the pitch segment having a longer pitch length and thicker in the pitch segment having a shorter pitch length, so that the distance from the center of the tire to the land surface under inflation of air pressure is made shorter in the pitch segment having a longer pitch length, which is properly combined with the rigidity element and RRO, and hence RFV produced due to the difference in rigidity between pitch segments can effectively be off-set by the difference in tread rubber thickness.

When the negative ratio in each pitch segment is constant and the distance from the center of the tire to the land surface is long in the pitch segment having a short pitch length, or when the thickness of the tread rubber itself is thicker in the pitch segment having a short pitch length, RRO is caused. However, when it is properly combined with the rigidity between pitch segments, RFV produced due to the rigidity between pitch segments can effectively be off-set by the difference in tread rubber thickness to sufficiently uniformize RFV over the full circumference of the tire.

Furthermore, when the sum of transverse sectional areas of vent-spews remaining in the land portion in a direction perpendicular to a lengthwise direction of the vent-spew is made large in the pitch segment having a longer pitch length to increase the distance from the center of the tire to the land surface under inflation air pressure in the pitch segment having a short pitch length, RFV can sufficiently be uniformized over the full circumference of the tire likewise the above case.

Moreover, the tread rubber thickness adjusted by the vent-spew is typically represented by the following formula:

$$\text{tread rubber thickness} = (\pi/4)A^2 \cdot N \cdot L/S \propto A^2 \cdot N \cdot L/S$$

(wherein S is surface area of a land portion, A is diameter of a vent-spew, N is number of vent-spews and L is length of a vent-spew), from which it is understood that the tread rubber thickness can easily be controlled by selecting the vent-spew diameter A and vent-spew number N with respect to the land surface area S.

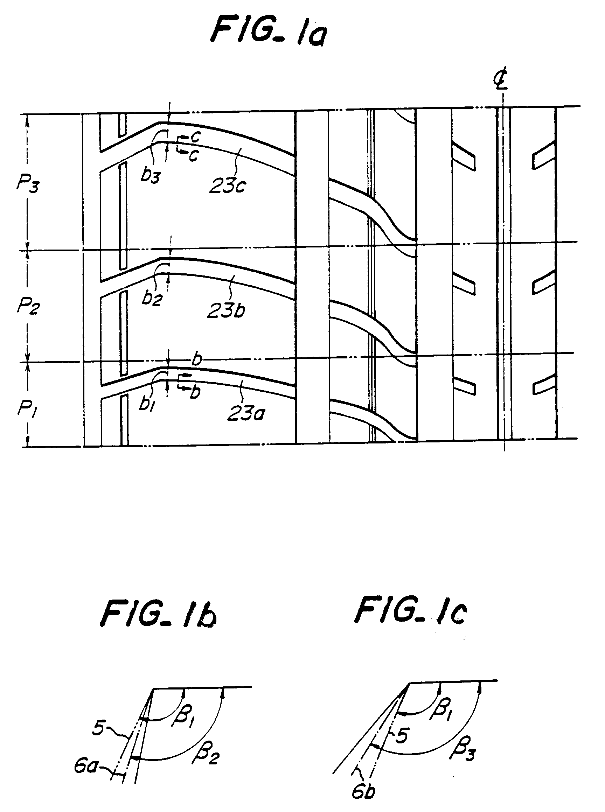

In Fig. 1 is shown an embodiment of a tread structure, in which pitch segments $P_1$, $P_2$, $P_3$ in the tread pattern shown as a developed view in Fig. 1a have a constant negative ratio within a range of 25-55%, respectively. Therefore, when the pitch ratio is 7:9:11 as previously mentioned, the ratio of opening widths $b_1:b_2:b_3$ in lateral grooves 23a, 23b, 23c included in these pitch segments is also 7:9:11.

In this tread pattern, the depths of the lateral grooves 23a, 23b, 23c are constant and the angle of groove wall with respect to the land surface is made larger in the pitch segment having a longer pitch length. That is, the ratio of making the groove wall angle small or large with respect to the groove wall in the middle pitch segment as a standard is preferably 1.5-2.5 times the difference between an angle $\beta_1$ of the groove wall 5 in the pitch segment $P_2$ with respect to the land surface and an angle $\beta_2$ or $\beta_3$ of the groove wall 6a or 6b in the other pitch segment $P_1$ or $P_3$ for equalizing the groove volume ratio to the pitch ratio when one groove wall of each of the lateral grooves 23a, 23c is sectionally shown in Figs. 1b and 1c. Thus, the groove volume is decreased in the longer pitch segment and increased in the shorter pitch segment as compared with the case in which the groove volume ratio in each pitch segment is equal to the pitch ratio, so that the ratio of increasing the land volume in the longer pitch segment is effectively reduced as compared with the ratio of increasing the land volume in the shorter pitch segment and hence the distance from the center of the tire to the land surface under an inflation of air pressure is longest in the shorter pitch segment and shortest in the longer pitch segment.

According to the embodiment of Fig. 1, there are manufactured an invention tire and a comparative tire each having a tire size of 255/40 ZR 17. In the invention tire, the pitch ratio of $P_1:P_2:P_3$ is 7:9:11, and the depth of the each lateral groove is 6.4 mm, and the angle of groove wall with respect to the land surface is 99° in the pitch segment $P_1$, 105° in the pitch segment $P_2$ and 111° in the pitch segment $P_3$, respectively. The comparative tire has the same structure as the invention tire except that the angle of groove wall in all pitch segments is 105°. When the RFV waveform is measured with respect to these tires in the manner as described below, the peak-to-peak value of RFV resulted from vulcanization factor is 1.90 kg in the comparative tire and 0.50 kg in the invention tire.

In this test, the tire mounted on a rim of 9 inches in width and inflated under an air pressure of 2.0 kgf/cm$^2$ is pushed on a rotating drum of 838.2 mm (33 inches) in diameter in a uniformity testing machine under a load of 500 kg, during which the drum is rotated at a speed of 60 rpm.

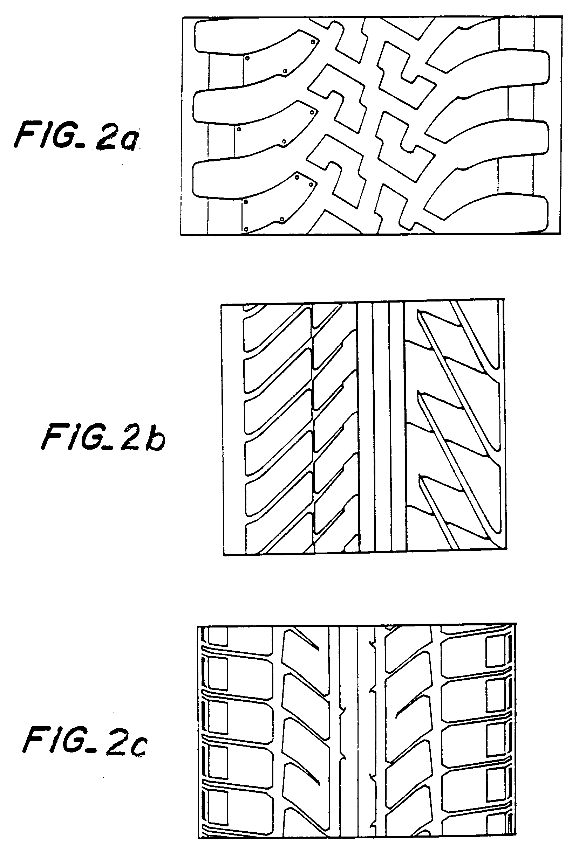

Although the invention has been described with respect to the illustrated embodiments, it is naturally applicable to tread patterns in which the lateral groove is provided with a component extending in the widthwise direction of the tread as shown in Figs. 2a, 2b and 2c.

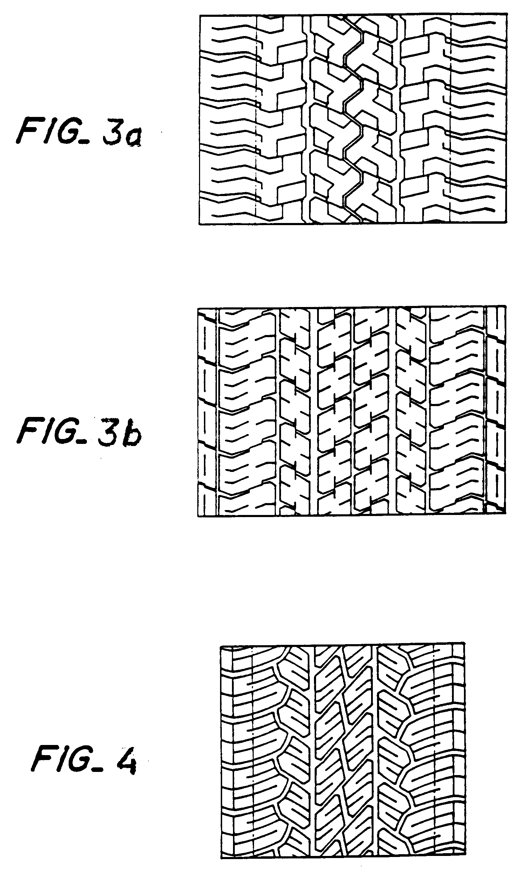

On the other hand, the invention is not applied to tread patterns in which the component extending in the widthwise direction of the tread is relatively small in the circumferential zigzag groove as shown in Figs. 3a and 3b, while it may be applied to a tread pattern in which the component extending in the widthwise direction of the tread is relatively large in the circumferential zigzag groove as shown in Fig. 4.

When the angle of the groove wall with respect to the land surface is made larger as the pitch length in the pitch segment becomes longer, the tread rubber thickness is thinner in the longer pitch segment and thicker in the shorter pitch segment, so that the distance from the tire center to the land surface under inflation air pressure is made longer as the pitch length in the pitch segment becomes shorter, which can properly be combined with the rigidity element and RRO to produce the difference in tread rubber thickness among the pitch segment for effectively off-setting RFV produced due to the difference in rigidity between pitch segments.

## Claims

1. A pneumatic tire having a tread pattern formed by arranging lateral grooves (23a, 23b, 23c) having a widthwise extending component in a ground contact portion of a tread and combining at least two kinds of pitch segments having different pitch lengths ($P_1$, $P_2$, $P_3$) in the circumferential direction of the tread, in which a negative ratio in each pitch segment is 25-55%, characterized in that the negative ratio in each pitch segment is constant, and in that the depth of the lateral groove included in each pitch segment is constant and the angle ($\beta$) of each groove wall with respect to the land surface is made larger in the pitch segment having a longer pitch length.

2. A pneumatic tire as claimed in claim 1, characterized in that the angle is larger in the block having a longer pitch length and smaller in the block having a shorter pitch length as compared with the angle bringing about the volume ratio equal to the pitch ratio as a standard.

3. A pneumatic tire as claimed in claim 1 or 2, characterized in that the ratio of making the groove wall angle large or small with respect to the groove wall in the middle pitch segment as a standard is 1.5 to 2.5 times the difference in the groove wall angle between the middle pitch segment and the other pitch segment having the volume ratio equal to the pitch ratio.

## Patentansprüche

1. Luftreifen, der ein Reifenprofil aufweist, das gebildet wird durch: Anordnen von seitlichen Rillen (23a, 23b, 23c), von denen sich ein in der Breitenrichtung erstreckender Teil in einem Bodenberührungsabschnitt eines Reifenprofils befindet, und Kombinieren von mindestens zwei Arten von Teilungssegmenten mit verschiedenen Teilungslängen ($P_1$, $P_2$, $P_3$) in der Umfangsrichtung des Reifenprofils, wobei ein negatives Verhältnis in jedem Teilungssegment 25-55% beträgt, dadurch gekennzeichnet, daß das negative Verhältnis in jedem Teilungssegment konstant ist; und daß die Tiefe der seitlichen Rille, die in jedem Teilungssegment eingeschlossen ist, konstant ist, und der Winkel ($\beta$) einer jeden Rillenwand mit Bezugnahme auf die hervorstehende Oberfläche in dem Teilungssegment größer ausgeführt wird, das eine längere Teilungslänge aufweist.

2. Luftreifen nach Anspruch 1, dadurch gekennzeichnet, daß der Winkel in dem Block, der eine längere Teilungslänge aufweist, größer ist, und in dem Block kleiner, der eine kürzere Teilungslänge aufweist, verglichen mit dem Winkel, der das Volumenverhältnis gleich dem Teilungsverhältnis als Norm bewirkt.

3. Luftreifen nach Anspruch 1 oder 2, dadurch gekennzeichnet, daß das Verhältnis des Ausführens des Rillenwandwinkels groß oder klein mit Bezugnahme auf die Rillenwand im mittleren Teilungssegment als Norm das 1,5- bis 2,5-fache der Differenz des Rillenwandwinkels zwischen dem mittleren Teilungssegment und dem weiteren Teilungssegment beträgt, bei dem das Volumenverhältnis gleich dem Teilungsverhältnis ist.

**Revendications**

1. Bandage pneumatique comportant une sculpture de bande de roulement formée par l'agencement de rainures latérales (23a, 23b, 23c) comportant une composante s'étendant dans le sens de la largeur dans une partie de contact au sol d'une bande de roulement, et la combinaison d'au moins deux types de segments de pas, ayant des longueurs de pas différentes ($P_1$, $P_2$, $P_3$) dans la direction circonférentielle de la bande de roulement, le rapport négatif dans chaque segment de pas étant compris entre 25 et 55%, caractérisé en ce que le rapport négatif dans chaque segment de pas est constant, la profondeur de la rainure latérale incluse dans chaque segment de pas étant constante, et l'angle ($\beta$) de chaque paroi de rainure par rapport à la surface d'appui étant accru dans le segment de pas ayant une longueur de pas accrue.

2. Bandage pneumatique selon la revendication 1, caractérisé en ce que l'angle est plus grand dans le bloc ayant une longueur de pas accru et plus petit dans le bloc ayant une longueur de pas réduite, par rapport à l'angle entraînant un rapport de volume égal au rapport de pas, servant de référence.

3. Bandage pneumatique selon les revendications 1 ou 2, caractérisé en ce que le rapport consistant à accroître ou à réduire l'angle de la paroi de la rainure par rapport à la paroi de la rainure dans le segment de pas médian, servant de référence, représente 1,5 à 2,5 fois la différence de l'angle de la paroi de la rainure entre le segment de pas médian et l'autre segment de pas ayant un rapport de volume égal au rapport de pas.

# FIG. 1a

# FIG. 1b    FIG. 1c

FIG. 2a

FIG. 2b

FIG. 2c

FIG. 3a

FIG. 3b

FIG. 4